(19)

Europäisches
Patentamt
European
Patent Office
Office européen
des brevets

(11) **EP 2 322 576 A2**

(12) **EUROPEAN PATENT APPLICATION**
published in accordance with Art. 153(4) EPC

(43) Date of publication:
**18.05.2011 Bulletin 2011/20**

(51) Int Cl.:
***C08L 33/06*** (2006.01)

(21) Application number: **09810168.6**

(22) Date of filing: **24.08.2009**

(86) International application number:
**PCT/KR2009/004703**

(87) International publication number:
**WO 2010/024563 (04.03.2010 Gazette 2010/09)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **26.08.2008 KR 20080083138**

(71) Applicant: **SSCP Co., Ltd.
Gyeonggi-do 425-833 (KR)**

(72) Inventors:
• **CHOI, Yong Jin
Seoul 151-801 (KR)**
• **KIM, Sang Hwan
Gunpo-si
Gyronggi-do 435-725 (KR)**

• **MIN, Kyoung Beom
Seoul 151-910 (KR)**
• **KIM, Yong Min
Ansan-si
Gyeonggi-do 405-819 (KR)**
• **CHOI, Hae Woog
Bucheon-si
Gyeonggi-do 420-753 (KR)**
• **KIM, Min Jeong
Seoul 110-080 (KR)**

(74) Representative: **Chaillot, Geneviève et al
Cabinet Chaillot
16-20 Avenue de l'Agent Sarre
B.P. 74
92703 Colombes Cedex (FR)**

(54) **PHOTOPOLYMERIZED RESIN COMPOSITION AND OPTICAL FIBER MANUFACTURED WITH SAME**

(57) Disclosed is a photopolymerizable resin composition. The photopolymerizable resin composition includes 40 to 80% by weight of a photopolymerizable urethane (meth)acrylate oligomer, 10 to 40% by weight of a low-viscosity multifunctional urethane acrylate oligomer, and 1 to 10% by weight of a photoinitiator. The photopolymerizable resin composition is cured by UV light to form a film whose shrinkage and expansion rates after immersion in hot water are low, leading to minimal changes in tensile strength and adhesive strength before and after water immersion. Further disclosed is an optical fiber using the photopolymerizable resin composition. The optical fiber undergoes minimal change in strip force before and after immersion in hot water.

**EP 2 322 576 A2**

## Description

[Technical Field]

The present invention relates to a photopolymerizable resin composition and an optical fiber having an outer coating film formed using the photopolymerizable resin composition. More particularly, the present invention relates to a photopolymerizable resin composition that includes a low-viscosity multifunctional urethane acrylate oligomer and is cured by UV light to form a film whose shrinkage and expansion rates after immersion in hot water are low, leading to minimal changes in tensile strength and adhesive strength before and after water immersion, and an optical fiber using the photopolymerizable resin composition that undergoes minimal change in strip force before and after immersion in hot water.

[Background Art]

Generally, an optical fiber coating consists of an inner coating film acting as a buffer to protect a glass fiber and an outer coating film for protecting the optical fiber from external influences.
The inner coating film is formed by directly applying a composition capable of protecting the glass fiber to the glass fiber. Curing makes the composition for the inner coating film soft and elastic. The inner coating film protects the glass fiber core and absorbs shock applied when the optical fiber is bent or is processed into a cable or splice.
Generally, a composition for the outer coating film should be hard enough to increase the strength of the optical fiber and minimize external physical influences. Other requirements of the composition for the outer coating film are sufficient flexibility for ease of handling of the optical fiber, low water absorption, stickiness, chemical resistance and sufficient adhesion to the inner coating film.
Each of the coating compositions typically includes an oligomer and a reactive diluent. A composition for the outer coating film should be rapidly cured and have an appropriate viscosity so as to be applicable to the production of the optical fiber.
However, conventional coating compositions do not ensure rapid curing owing to their high viscosity levels. Thus, it is necessary to use large quantities of reactive diluents in order to adjust the viscosity of the compositions to a satisfactory level. Particular disadvantages associated with the use of the reactive diluents are modification and poor adhesive strength of the compositions in hot water, resulting in low long-term reliability of optical fibers and bringing about a reduction in the ability of optical fibers to transmit signals. Another disadvantage of the relatively low molecular weight reactive monomers is that volatile components are released during coating.
Commercially available oligomer compositions are more expensive than monomer compositions. Accordingly, the use of large amounts of oligomers increases the production costs of optical fibers as well as compositions for outer coating films.
There have been developed UV curable compositions for optical fibers with excellent physicochemical properties, for example, a UV curable composition using a mixture of pentaerythritol pentaacrylate and pentaerythritol hexaacrylate as multifunctional monomers. Such a UV curable composition is cured by UV light to form a film whose shrinkage and expansion rates after immersion in hot water are high. The high shrinkage and expansion rates considerably deteriorate the tensile strength and adhesive strength of the film after water immersion and greatly reduce the strip force of an optical fiber produced using the composition after water immersion, resulting in low long-term reliability of the optical fiber and bringing about a reduction in the ability of the optical fiber to transmit signals.

[Disclosure]

[Technical Problem]

The present invention has been made in view of the above problems, and an object of the present invention is to provide a UV curable composition for an optical fiber that includes a low-viscosity multifunctional urethane acrylate oligomer and is cured by UV light to form a film whose shrinkage and expansion rates after immersion in hot water are low wherein the tensile strength and adhesive strength of the film after water immersion are reduced by less than 10% and the strip force of an optical fiber using the composition after water immersion is reduced by less than 10%. Another object of the present invention is to provide a method for preparing the UV curable composition.

[Technical Solution]

In order to achieve these objects, the present invention provides a photopolymerizable resin composition including 40 to 80% by weight of a photopolymerizable urethane (meth)acrylate oligomer, 10 to 40% by weight of a low-viscosity multifunctional urethane acrylate oligomer, and 1 to 10% by weight of a photoinitiator.

The low-viscosity multifunctional urethane acrylate oligomer may have a viscosity at room temperature (25°C) of 100,000 cps or below when an acrylic monomer is added in an amount not larger than 20% by weight.

The low-viscosity multifunctional urethane acrylate oligomer may be synthesized by reaction of a polyisocyanate having three or more isocyanate groups, an acrylate having a hydroxyl group and containing three or more acrylic moieties in the molecule, a metal catalyst, and a radical polymerization inhibitor.

[Advantageous Effects]

The photopolymerizable resin composition including a low-viscosity multifunctional urethane acrylate oligomer according to the present invention is cured by UV light to form a film whose shrinkage and expansion rates after immersion in hot water are low. The high shrinkage and expansion rates reduce the tensile strength and adhesive strength of the film after water immersion by less than 10%. In addition, the photopolymerizable resin composition of the present invention has good workability for the production of an optical fiber and has excellent physicochemical properties. The strip force of the optical fiber after immersion in hot water is reduced by less than 10%.

[Best Mode]

The present invention provides a photopolymerizable resin composition. In one embodiment, the photopolymerizable resin composition includes 40 to 80% by weight of (A) a photopolymerizable urethane (meth)acrylate oligomer, 10 to 40% by weight of (B) a low-viscosity multifunctional urethane acrylate oligomer, and 1 to 10% by weight of (C) a photoinitiator. The photopolymerizable resin composition of the present invention is highly water resistant.

If necessary, the photopolymerizable resin composition of the present invention may further include a reactive acrylic monomer having at least one acrylate, (meth)acrylate or vinyl group and at least one additive selected from photosensitizers, polymerization inhibitors, dispersants, defoaming agents and leveling agents. These additional components are those well known in the art.

The present invention also provides a highly water resistant optical fiber produced using the photopolymerizable resin composition.

Hereinafter, the constituent components and a preparation method of the photopolymerizable resin composition according to the present invention will be described in detail.

(A) Photopolymerizable urethane acrylate oligomer

The photopolymerizable urethane acrylate oligomer (A) may be synthesized from a composition including (i) a polyol copolymer, (ii) a polyisocyanate, (iii) an acrylate alcohol, (iv) a urethane reaction catalyst, and (v) a polymerization inhibitor.

The photopolymerizable urethane acrylate oligomer (A) is preferably used in an amount of 40 to 80% by weight, based on the total weight of the photopolymerizable resin composition. The use of the photopolymerizable urethane acrylate oligomer (A) in an amount of less than 40% by weight may increase the shrinkage on cure of the resin composition, causing microbending loss and vapor generation by UV energy or heating during processing. Meanwhile, the use of the photopolymerizable urethane acrylate oligomer (A) in an amount exceeding 80% by weight may lead to an increase in viscosity during processing, resulting in poor workability.

The constituent components of the composition for the oligomer (A) are as follows.

(i) Polyol copolymer

Preferably, the polyol copolymer (i) has a molecular weight of 100 to 10,000 and contains $-CH_2CH_2O-$ or $-CH_2CH(CH_2CH_3)O-$ as a repeating unit.

The polyol copolymer (i) is preferably selected from the group consisting of polyester polyols, polyether polyols, polycarbonate polyols, polycaprolactone polyols, tetrahydrofuran propylene oxide ring opening copolymers, ethylene glycol, propylene glycol, 1,4-butanediol, 1,5-pentanediol, 1,6-hexandiol, neopentyl glycol, 1,4-cyclohexane dimethanol, bisphenol A type diols, and mixtures thereof. The polyol polymer is preferably used in an amount of 10 to 90% by weight, based on the total weight of the composition for the photopolymerizable urethane acrylate oligomer (A).

(ii) Polyisocyanate

The polyisocyanate (ii) is preferably selected from the group consisting of 2,4-tolylene diisocyanate, 2,6-tolylene diisocyanate, 1,3-xylene diisocyanate, 1,4-xylene diisocyanate, 1,5-naphthalene diisocyanate, 1,6-hexane diisocyanate, isophorone diisocyanate (IPDI), and mixtures thereof. The polyisocyanate (ii) is preferably used in an amount of 20 to 40% by weight, based on the weight of the oligomer (A).

(iii) Acrylate alcohol

The acrylate alcohol (iii) has one or more (meth)acrylate and hydroxyl groups. The acrylate alcohol (iii) is preferably selected from the group consisting of 2-hydroxyethyl (meth)acrylate, 2-hydroxypropyl (meth)acrylate, 2-hydroxybutyl (meth)acrylate, 2-hydroxyethyl acrylate, 2-hydroxypropyl acrylate, 2-hydroxy-3-phenyloxypropyl (meth)acrylate, 4-hydroxybutyl acrylate, neopentyl glycol mono(meth)acrylate, 4-hydroxycyclohexyl (meth)acrylate, 1,6-hexanediol mono(meth)acrylate, pentaerythritol penta(meth)acrylate, dipentaerythritol penta(meth)acrylate, and mixtures thereof. The acrylate alcohol (iii) is preferably used in an amount of 20 to 35% by weight, based on the weight of the oligomer (A).

(iv) Urethane reaction catalyst

The urethane reaction catalyst (iv) is added in a small amount to catalyze the urethane reaction. The urethane reaction catalyst (iv) is preferably selected from the group consisting of copper naphthenate, cobalt naphthenate, zinc naphthenate, n-butyltin laurate, tristhylamine, 2-methyltriethylenediamide, and mixtures thereof. The reaction catalyst (iv) is preferably used in an amount of 0.01 to 1% by weight, based on the weight of the oligomer (A).

(v) Polymerization inhibitor

The polymerization inhibitor (v) is preferably selected from the group consisting of hydroquinone, hydroquinone monomethyl ether, para-benzoquinone, phenothiazine, and mixtures thereof. The polymerization inhibitor (v) is preferably used in an amount of 0.01 to 1% by weight, based on the weight of the oligomer (A).

The photopolymerizable urethane acrylate oligomer (A) can be synthesized from the components (i) to (v) by the following procedure.

First, the polyisocyanate (ii) is put in a round-bottom flask equipped with an agitator. One third of the total weight of the urethane reactive catalyst (iv) is added to the flask while stirring at 200 to 300 rpm, and then the polyol copolymer (i) is slowly added to the flask.

Optionally, two or more kinds of polyols may be added. In this case, the characteristics of the oligomer vary depending on the order of addition of the polyols. It is preferred to first add a bisphenol derivative as the polyol. Care must be taken because a large amount of heat is released during the reaction. The reaction is continued for about 1 to about 3 hr while maintaining the reaction temperature at 70 to 80°C.

After the addition is complete, the theoretical NCO content and the NCO content of the reaction mixture are appropriately controlled to obtain a urethane prepolymer. The polymerization inhibitor (v) and the acrylate alcohol (iii) are slowly added to allow the reaction to proceed. After the addition is complete, the reaction temperature is maintained at 80°C for 2 to 3 hr. Completion of the reaction is confirmed by the disappearance of the NCO peak at 2,270 cm$^{-1}$ in the infrared (IR) spectrum, indicating complete reaction of the isocyanate.

This procedure gives the photopolymerizable urethane acrylate oligomer (A). The photopolymerizable oligomer may be present in an amount of 40 to 80% by weight, based on the total weight of the photopolymerizable resin composition. The number average molecular weight of the oligomer is determined by gel permeation chromatography (GPC). The viscosity of the oligomer is measured at 40°C using a Brookfield HB type viscometer provided with a #51 spindle.

(B) Low-viscosity multifunctional urethane acrylate oligomer

The low-viscosity urethane acrylate oligomer is prepared by the following procedure. First, a polyisocyanate having three or more isocyanate groups is reacted with an acrylate having a hydroxyl group and containing three or more acrylic moieties in the molecule in the presence of a metal catalyst and a radical polymerization inhibitor until the isocyanate (NCO) peak disappears. Then, 5 to 30% by weight of a UV curable monomer is added to the reaction mixture to prepare the oligomer (B). The oligomer (B) has an average of 6 to 9 reactive acrylate groups in the molecule and a low viscosity at room temperature (25°C) of 100,000 cps or below.

Tri- or higher functional polyisocyanates suitable for use in the present invention are 1,6-hexamethylene diisocyanate trimer, 1,6-hexamethylene diisocyanate biuret and 1,6-hexamethylene diisocyanate allophanate, which exhibit different viscosities depending on their manufacturers. Examples of commercially available multifunctional polyisocyanates include TKA-100P (Asahi-Kasei Chemical), Desmodur N3200, Desmodur N3300 and Desmodur N3500 (Bayer), and HA-100, HA-200, HA-300 and HI-100 (BASF). These multifunctional polyisocyanates may be used alone or as a mixture thereof.

The acrylate having a hydroxyl group and containing three or more acrylic moieties in the molecule is preferably a mixture of pentaerythritol tetraacrylate and pentaerythritol triacrylate. The viscosity of the pentaerythritol tetraacrylate/ triacrylate mixture is greatly affected by the very small proportion of oligomers formed during esterification between pentaerythritol and acrylic acid and influences the viscosity of the oligomer (B). Therefore, it is preferred that the pentaerythritol tetraacrylate and the pentaerythritol triacrylate are highly pure, and particularly, the pentaerythritol triacrylate is present in an amount of 50 to 60% by weight.

Representative examples of catalysts usable for reaction between the polyisocyanate and the acrylate include tin compounds such as dibutyltin dilaurate and amine compounds such as 1,8-diazabicyclo[5,4,0]undec-7-ene (DBU). Examples of radical polymerization inhibitors usable for reaction between the polyisocyanate and the acrylate include hydroquinone, p-methoxyphenol, nitrobenzene and 2,6-di-tetrabutyl-4-methylphenol (BHT).

As the UV curable monomer, a reactive acrylic monomer is suitable. The reactive acrylic monomer is used as a diluent to adjust the viscosity of the oligomer. Examples of suitable UV curable monomers include hexanediol diacrylate (HDDA), isobornyl acrylate (IBOA) and phenoxyethyl acrylate. These UV curable monomers are unreactive because they contain no hydroxyl group. The UV curable monomer is preferably used in an amount ranging from 0 to 20% by weight. Within this range, the physicochemical properties of the photopolymerizable resin composition are not affected.

The low-viscosity multifunctional urethane acrylate oligomer is preferably used in an amount of 10 to 40% by weight, based on the total weight of the photopolymerizable resin composition. The use of the oligomer in an amount of more than 40% by weight excessively increases the cross-linking density of a film after curing, and as a result, the film is apt to crack when heat or shock is applied thereto. Meanwhile, the use of the oligomer in an amount of less than 10% by weight causes deterioration of mechanical properties such as hardness and wear resistance.

The photoinitiator used in the photopolymerizable resin composition of the present invention is added to ensure a high degree of cure of the resin in order to allow a coating process for the production of an optical fiber to proceed at a high line velocity of at least 1,500 m/min. The photoinitiator forms free radicals when exposed to UV energy. The free radicals attack the double bonds of the resin, inducing polymerization of the resin. The photoinitiator is preferably selected from the group consisting of Irgacure #184 (hydroxycyclohexyl phenyl ketone), Irgacure #907 (2-methyl-1-[4-(methylthio) phenyl]- 2-morpholinopropan-1-one), Irgacure #500 (hydroxyketones and benzophenone), Irgacure #651 (benzyl dimethyl ketone), Darocur #1173 (2-hydroxy-2-methyl-1-phenyl-propan-1-one), Darocur TPO (2,4,6-trimethylbenzoyl-diphenylphosphineoxide), Darocur CGI#1800 (bisacyl phosphine oxide), Darocur CGI#1700 (bisacyl phosphine oxide and hydroxyketone), all of which are commercially available from Ciba Geigy, and mixtures thereof. The photoinitiator is used in an amount of 1 to 10% by weight, based on the total weight of the resin composition.

The photopolymerizable resin composition of the present invention may further include a photopolymerizable monomer. The photopolymerizable monomer is used to adjust the working viscosity with the oligomer (A) having a polymeric structure. Thus, the photopolymerizable monomer preferably has a low molecular weight. If needed, a monomer effective to provide an increase in adhesive strength may be further used to improve adhesion to an adherend.

The photopolymerizable monomer has at least one acrylate, methacrylate or vinyl group in the molecular structure. The photopolymerizable monomer may have one to three or more different functional groups. It is particularly preferred that the photopolymerizable monomer exhibits low shrinkage on cure while possessing a high tensile strength in a film state.

The photopolymerizable monomer is preferably selected from the group consisting of phenoxyethyl acrylate, phenoxyethylene glycol acrylate, phenoxytetraethylene glycol acrylate, phenoxyhexaethylene glycol acrylate, isobornyl acrylate (IBOA), isobornyl methacrylate, N-vinylpyrrolidone (N-VP), N-vinylcaprolactam (N-VC), acryloyl morpholine (ACMO), ethoxylated bisphenol diacrylate, ethoxylated phenol monoacrylate, polyethylene glycol 400 diacrylate, tripropylene glycol diacrylate, trimethylpropane triacrylate (TMPTA), polyethylene glycol diacrylate, ethylene oxide-addition triethylolpropane triacrylate (EO-TMPTA), pentaerythritol tetraacrylate (PETA), 1,4-butanediol diacrylate, 1,6-hexanediol diacrylate, ethoxylated pentaerythritol tetraacrylate, ethoxylated nonylphenol acrylate, 2-phenoxyethyl acrylate, ethoxylated bisphenol A diacrylate, and mixtures thereof.

Other examples of photopolymerizable monomers suitable for use in the present invention include alkoxylated nonylphenol acrylate, alkoxylated trifunctional acrylate ester, metallic diacrylate, trifunctional acrylate ester and trifunctional methacrylate ester. These monomers may be used alone or as a mixture thereof.

The photopolymerizable monomer is preferably used in an amount of 5 to 60% by weight, based on the total weight of the photopolymerizable resin composition. If the photopolymerizable monomer is used in an amount of less than 5% by weight, it is difficult to dilute the high-viscosity oligomer (A) to a viscosity of 3,000 to 10,000 cps (at 25 °C), which is a workable level. Meanwhile, if the photopolymerizable monomer is used in an amount exceeding 60% by weight, the shrinkage on cure of a film increases and the heat stability of a film during processing at high temperature deteriorates, leading to gelation. This gelation causes an increase in viscosity and particle size, which induces surface non-uniformity upon coating and causes optical loss.

The photopolymerizable resin composition of the present invention may further include at least one known additive such as a leveling agent, a slip agent or a stabilizer to achieve improved heat stability, oxidation stability, storage stability, surface characteristics, flow characteristics and processing characteristics.

The stabilizer plays a role in improving the heat, oxidation and storage stability of the photopolymerizable resin composition. The stabilizer is preferably used in an amount of about 0.1 to about 2% by weight, based on the total weight of the photopolymerizable resin composition. The stabilizer is preferably selected from the group consisting of Irganox 1010, Irganox 1035, Irganox 1076 (CIBA) and mixtures thereof. The leveling agent is preferably selected from the group consisting of DC-190 and DC-193 (Dow-Corning), RAD2100, RAD2200N and RAD2300 (Tego), and mixtures thereof. The slip agent is preferably selected from the group consisting of DC-56 and DC-57 (Dow-Corning), BYK-300 and BYK-333 (BYK-Chemi), and mixtures thereof. The slip agent is preferably used in an amount of about 0.1 to about 2% by weight, based on the total weight of the composition.

A detailed description will be given of a method for preparing the photopolymerizable resin composition.

The photopolymerizable resin composition of the present invention is prepared by the following procedure. First, the photopolymerizable urethane acrylate oligomer (A), the low-viscosity multifunctional urethane acrylate oligomer (B), the reactive monomer, the photoinitiator and the additive are put into a reactor. The mixture is allowed to react using a dispersion impeller at a uniform rate of at least 1,000 rpm, a temperature of 15 to 50°C and a humidity of 60% or less. If the reaction temperature is lower than 15°C, the oligomer (A) is viscous, causing problems during processing. Meanwhile, if the reaction mixture is higher than 50 °C, the photoinitiator forms radicals, which induce curing. If the reaction humidity is higher than 60%, bubbles are formed during subsequent coating of the resin composition and undesirable side reactions occur between unreacted components and moisture in air. If the stirring rate is lower than 1,000 rpm, mixing of the components is insufficient.

The present invention also provides an optical fiber produced using the water resistant photopolymerizable resin composition. The optical fiber of the present invention exhibits much lower shrinkage and expansion rates and a higher curing rate than conventional optical fibers. In addition, the photopolymerizable resin composition of the present invention undergoes minimal changes in tensile strength and adhesive strength before and after water immersion, and the optical fiber of the present invention undergoes minimal change in strip force before and after water immersion. Therefore, the optical fiber of the present invention does not suffer from the problems such as deteriorated physical properties and increased optical loss even after immersion in hot water.

[Mode for Invention]

Hereinafter, the present invention will be explained in more detail with reference to the following examples including preparative examples. However, these examples do not serve to limit the invention and are set forth for illustrative purposes only. The scope of the invention is defined by the appended claims.

### <Preparative Examples>

Preparation of (A) urethane acrylate oligomer

Preparative Example 1

27.8 g (1.26 moles) of isophorone diisocyanate (IPDI) (Lyondell Chemical Company) and 0.1 g of dibutyltin dilaurate (Songwon Industrial (Korea)) were placed in a 3 L round-bottom flask equipped with an agitator. After the temperature was raised to 50°C, 103 g (0.21 moles) of a bisphenol A type diol (BSA-60A, Hannong Chemicals Inc. (Korea)) having an average molecular weight of about 500 g/mol and 418 g (0.42 moles) of polytetramethylene glycol polyol (PTMG) (BASF) having an average molecular weight of 1,000 g/mol were sequentially added to the flask. After the addition was finished, the NCO content of the reaction mixture whose theoretical NCO content is 0.67% was adjusted to 0.1-0.3% to obtain a urethane prepolymer. 0.5 g of hydroquinone monomethyl ether (HQMME) (Eastman) and 5 g of Irganox 1010 (Ciba Specialty Chemicals) were added. Thereafter, 194 g (1.67 moles) of 2-hydroxyethyl acrylate (2-HEA) (Nippon Shokubai (Japan)), which corresponds to an amount about 0.4 moles greater than the stoichiometric ratio, was slowly added to carry out the reaction. After the addition was finished, the reaction temperature was maintained at 80 °C for 2 hr. Completion of the reaction was confirmed by the disappearance of the NCO peak at 2,270 cm$^{-1}$ in the infrared spectrum, indicating complete reaction of the isocyanate. After completion of the reaction, 250 g of phenoxyethyl acrylate (P-OA) (Kyoeisha Chemical Co. Ltd.) was added as a monomer to dilute the reaction mixture, yielding a urethane (meth)acrylate oligomer as a homogeneous liquid. The number average molecular weight of the oligomer was found to be 6,000 g/mol, as determined by gel permeation chromatography (GPC). The oligomer was found to have a viscosity at 40 °C of 5,500 cps and an average of eight urethane bonds.

Preparation of (B) low-viscosity multifunctional urethane acrylate oligomer

Preparative Example 2

500 g of a mixture of pentaerythritol tetraacrylate and pentaerythritol triacrylate (40-45 : 55-60 (w/w)) was placed in a four-neck flask equipped with a thermometer, a condenser, a dropping funnel and an agitator, and then 200 ppm of p-methoxyphenol as a polymerization inhibitor was added thereto. The mixture was stirred at room temperature for about 30 min. To the mixture was added 100 ppm of dibutyltin dilaurate as a catalyst. The resulting mixture was heated to about 70 °C, followed by dropwise addition of one equivalent of 1,6-hexamethylene diisocyanate trimer (TKA-100P, Asahi Kasei). The mixture was allowed to react for 5 hr. After the disappearance of the isocyanate (NCO) peak was confirmed by infrared (IR) spectroscopy, the reaction mixture was cooled to 50 °C. To the reaction mixture was added 15 parts by weight of isobornyl acrylate (IBOA), yielding a low-viscosity multifunctional urethane acrylate oligomer. The product was found to have a viscosity at room temperature of 12,000 cps.

**Preparative Example 3**

A low-viscosity multifunctional urethane acrylate oligomer having a viscosity at room temperature of 15,000 cps was prepared in the same manner as in Preparative Example 2, except that 1,6-hexamethylene diisocyanate allophanate (HA 100, BASF) was used instead of 1,6-hexamethylene diisocyanate trimer (TKA-100P, Asahi Kasei) and isobornyl acrylate (IBOA) as a diluent was used in an amount of 15 parts by weight.

**Preparative Example 4**

A low-viscosity multifunctional urethane acrylate oligomer having a viscosity at room temperature of 10,000 cps was prepared in the same manner as in Preparative Example 3, except that 1,6-hexamethylene diisocyanate allophanate (HA 200, BASF) was used instead of 1,6-hexamethylene diisocyanate allophanate (HA 100, BASF) and isobornyl acrylate (IBOA) as a diluent was used in an amount of 15% by weight.

**Preparative Example 5**

A low-viscosity multifunctional urethane acrylate oligomer having a viscosity at room temperature of 13,000 cps was prepared in the same manner as in Preparative Example 3, except that 1,6-hexamethylene diisocyanate allophanate (HA 300, BASF) was used instead of 1,6-hexamethylene diisocyanate allophanate (HA 100, BASF).

<**EXAMPLES**>

**Example 1**

58.5 Parts by weight of the urethane acrylate oligomer prepared in Preparative Example 1, 15 parts by weight of the low-viscosity multifunctional urethane acrylate oligomer prepared in Preparative Example 2, and 20 parts by weight of ethylene oxide (10) bisphenol A type diacrylate were mixed with stirring. To the mixture were added 4 parts by weight of Darocur 1173 and 0.5 parts by weight of Darocur TPO as photoinitiators and 2 parts by weight of DC-57 (Dow-Corning), DC-190 (Dow-Corning) and Irganox 1076 (CIBA) as additives. Stirring was continued at 40 °C for 30 min, affording a photopolymerizable resin composition. The photopolymerizable resin composition was filtered through a 1 μm filter. The physical properties of the filtered composition were evaluated and the results are shown in Table 2.

**Examples 2-4**

Photopolymerizable resin compositions were prepared in the same manner as in Example 1, except that the multifunctional urethane oligomers prepared in Preparative Examples 3, 4 and 5 were used instead of the multifunctional urethane oligomer prepared in Preparative Example 2.

**Comparative Example 1**

In accordance with a typical example of currently available photopolymerizable resin compositions, 58.5 parts by weight of the urethane acrylate oligomer prepared in Preparative Example 1,15 parts by weight of a urethane acrylate oligomer (EBECRYL 1290, SK Cytec (Korea)) and 20 parts by weight of ethylene oxide (10) bisphenol A type diacrylate were mixed with stirring. To the mixture were added 4 parts by weight of Darocur 1173 and 0.5 parts by weight of Darocur TPO as photoinitiators and 2 parts by weight of DC-57 (Dow-Corning), DC-190 (Dow-Corning) and Irganox 1076 (CIBA) as additives. Stirring was continued at 40 °C for 30 min, affording a photopolymerizable resin composition. The photopolymerizable resin composition was filtered through a 1 μm filter. The physical properties of the filtered composition were evaluated.

## Comparative Examples 2 and 3

Based on a prior art UV curable composition using a mixture of pentaerythritol pentaacrylate and pentaerythritol hexaacrylate as multifunctional monomers, photopolymerizable resin compositions of Comparative Examples 2 and 3 were prepared in the same manner as in Example 1, except that 15% by weight of dipentaerythritol pentaacrylate (SR399, Sartomer) and 15% by weight of pentaerythritol hexaacrylate (DPCA-60, Nippon Kayagu) were used instead of the low-viscosity multifunctional urethane acrylate oligomer prepared in Preparative Example 2, respectively.

## Reference Example 1 (Preparation of UV curable composition for inner coating of optical fiber)

138.32 g (0.62 moles) of isophorone diisocyanate (IPDI) (Lyondell Chemical Company) and 0.50 g of dibutyltin dilaurate (Songwon Industrial (Korea)) were placed in a 2 L round-bottom flask equipped with an agitator. After the reaction temperature was raised to 80 °C, 109.03 g (0.11 moles) of polytetramethylene glycol polyol (PTMG) (BASF) having an average molecular weight of 1,000 was added to the flask. After the addition was finished, the NCO content of the reaction mixture whose theoretical NCO content is 8.67% was adjusted to 7.5-8.5%. 716.50 g (0.36 moles) of polypropylene glycol polyol (PPG) (Korea Polyol (Korea)) having an average molecular weight of 2,000 was added. After the addition was finished, the NCO content of the reaction mixture whose theoretical NCO content is 1.07% was adjusted to 0.7-1.0% to obtain a urethane prepolymer. 2.15 g of hydroquinone monomethyl ether (HQMME) (Eastman) and 37.96 g (0.33 moles) of 2-hydroxyethyl acrylate (2-HEA) (Nippon Shokubai (Japan)) were slowly added. After the addition was finished, the reaction temperature was maintained at 80 °C for 1 hr. Completion of the reaction was confirmed by the disappearance of the NCO peak at 2,275 cm$^{-1}$ in the infrared spectrum, indicating complete reaction of the isocyanate. As a result of the reaction, a urethane (meth)acrylate oligomer **LP-1** was prepared. The number average molecular weight (Mw) of the oligomer **LP-1** was found to be 23,000 g/mol, as determined by gel permeation chromatography (GPC). The oligomer **LP-1** was found to have a viscosity of 14,000 cps and an average of four urethane bonds.

62% by weight of the oligomer **LP-1**, 28% by weight of propoxylated nonylphenol acrylate (NPF-041, Hannong Chemicals Inc. (Korea)), 3% by weight of N-vinylcaprolactam (NVC) (BASF) and isobornyl acrylate (IBXA) (Kyoeisha Chemical Co. Ltd.) were mixed with stirring. To the mixture were added 2% by weight of Darocur TPO (Ciba Specialty Chemicals) as a photoinitiator, 1% by weight of γ-mercaptopropyltrimethoxysilane (S-810, CHISSO), 0.95% by weight of Irganox 1035 (Ciba Specialty Chemicals) and 0.05% by weight of diethylamine (JUNSEI). Stirring was continued at 40 °C for 30 min, affording a homogeneous transparent UV curable composition **LP-2**. The composition **LP-2** was filtered through a 1 μm filter. After the composition **LP-2** was spread on a glass plate having a size of 20 cm × 20 cm, the coating thickness was adjusted to 7-10 mil using a bar coater. The coated glass plate was placed in a fixed frame into which nitrogen was fed at a flow rate of 40 lpm. Thereafter, the composition was cured by irradiation with a 600 Watt 9 mm D-bulb (DRS10/12-QN, Fusion) at a rate of 30 fpm and a dose of 2.5 J/cm$^2$ to form a 100 μm thick film. The film was separated from the glass plate, cut to a width of 13 mm using a dedicated blade (JDC cutter), and stored in a desiccator at a temperature of 23 °C and a relative humidity of 50% or less for one day. The 2.5% secant modulus of the film was measured while pulling the film at a rate of 25 mm/min using a universal testing machine (4443 UTM, Instron). The measured 2.5% secant modulus was 0.14 kgf/mm$^2$.

**TABLE 1**

| | | Example 1 | Example 2 | Example 3 | Example 4 | Comparative Example 1 | Comparative Example 2 | Comparative Example 3 |
|---|---|---|---|---|---|---|---|---|
| Urethane oligomers | Preparative Example 1 | 58.5 | 58.5 | 58.5 | 58.5 | 58.5 | 58.5 | 58.5 |
| | Preparative Example 2 | 15 | | | | | | |
| | Preparative Example 3 | | 15 | | | | | |
| | Preparative Example 4 | | | 15 | | | | |
| | Preparative Example 5 | | | | 15 | | | |
| Urethane oligomers | EB-1290 | | | | | 15 | | |
| | SR399 | | | | | | 15 | |
| | DPCA60 | | | | | | | 15 |
| | SR602 | 20 | 20 | 20 | 20 | 20 | 20 | 20 |
| Photoinitiators | Irgacure1173 | 4 | 4 | 4 | 4 | 4 | 4 | 4 |
| | Darocur TPO | 0.5 | 0.5 | 0.5 | 0.5 | 0.5 | 0.5 | 0.5 |
| Additives | DC-57 | 0.3 | 0.3 | 0.3 | 0.3 | 0.3 | 0.3 | 0.3 |
| | DC-190 | 0.7 | 0.7 | 0.7 | 0.7 | 0.7 | 0.7 | 0.7 |
| | Irganox1076 | 1 | 1 | 1 | 1 | 1 | 1 | 1 |

The components and trademarks used in Table 1 are as follows. It should be noted that each of the components and trademarks refers to a compound or composition.

EB-1290: Aliphatic multifunctional urethane acrylate oligomer available from SK Cytec (Korea).

SR-602: Diacrylate of ethylene oxide modified bisphenol available from Sartomer, SR399: Dipentaerythritol pentaacrylate available from Sartomer, DPCA-60: Hexaacrylate of caprolactone modified dipentaerythritol available from Nippon Kayagu (Japan)

Evaluation of physical properties of photopolymerizable resin compositions

The mechanical properties (including viscosity, tensile strength, adhesive strength and glass transition temperature) and the hot-water resistance of the photopolymerizable resin compositions prepared in Examples 1-4 and Comparative Examples 1-3 were evaluated by the following methods. The results are shown in Table 2.

Viscosity

The viscosity of each of the photopolymerizable resin compositions was measured at a torque ranging from 50 to 90% using a Brookfield DV III+ viscometer provided with a #31 spindle in accordance with ASTM D-2196.

Tensile strength after curing

2.5% Secant modulus

After each of the photopolymerizable resin compositions was spread on a glass plate having a size of 20 cm $\times$ 20 cm, the coating thickness was adjusted to 7-10 mil using a bar coater. The coated glass plate was placed in a fixed frame into which nitrogen was fed at a flow rate of 40 lpm. Thereafter, the composition was cured by irradiation with a 600 Watt 9 mm D-bulb (DRS10/12-QN, Fusion) at a rate of 30 fpm and a dose of 1.0 J/cm$^2$ to form a 75-85 $\mu$m thick film. The film was separated from the glass plate, cut to a width of 13 mm using a dedicated blade (JDC cutter), and stored in a desiccator at a temperature of 23 °C and a relative humidity of 50% or less for one day. The 2.5% secant modulus of the film was measured while pulling the film at a rate of 25 mm/min using a universal testing machine (4443 UTM, Instron). The same kind of specimen was immersed in water at 65 °C for 7 days and stored in the dark for 6 hr. The adhesion of the film to the glass plate was measured while pulling the film at a rate of 25 mm/min using a universal testing machine (4443 UTM, Instron).

Glass transition temperature (T$_g$)

After each of the photopolymerizable resin compositions was spread on a glass plate having a size of 20 cm $\times$ 20 cm, the coating thickness was made uniform using a bar coater. The coated glass plate was placed in a fixed frame into which nitrogen was fed at a flow rate of 40 lpm. Thereafter, the composition was cured by irradiation with a 600 Watt 9 mm D-bulb (DRS10/12-QN, Fusion) at a rate of 30 fpm and a dose of 1.0 J/cm$^2$ to form a 75-85 $\mu$m thick film. The film was cut into a sample having a length of about 15 mm and a width of about 10 mm. The sample was mounted on a dynamic mechanical temperature analyzer (DMTA IV, Rheometry) and the measured geometric values were input to the analyzer. The sample was cooled to about -100 °C and was then heated to about 60 °C at a rate of 2 °C/min. The test frequency was 1.0 radian/sec. The measurement results were plotted. The glass transition temperature (Tg) of the sample was calculated from tan delta peaks of the graph.

Adhesion to glass on cure

Adhesion to glass

After the composition **LP-2** prepared in Reference Example 1 was spread on a glass plate having a size of 20 cm $\times$ 20 cm, the coating thickness was adjusted to 5 mil using a bar coater. Each of the photopolymerizable resin compositions prepared in Examples 1-4 and Comparative Examples 1-3 was spread on the composition **LP-2** and adjusted to a coating thickness of 10 mil. The coated glass plate was placed in a fixed frame into which nitrogen was fed at a flow rate of 40 lpm. Thereafter, the compositions were cured by irradiation with a 600 Watt 9 mm D-bulb (DRS10/12-QN, Fusion) at a rate of 30 fpm and a dose of 1.0 J/cm$^2$ to form a film. The film was cut to a width of 20 mm and stored in a desiccator at a temperature of 23 °C and a relative humidity of 50% or less for one day. The adhesion of the film to the glass plate was measured while pulling the film at a rate of 25 mm/min in a direction perpendicular to the glass plate using a universal testing machine (4443 UTM, Instron). The same kind of specimen was immersed in water at 65 °C for 10 days and stored in the dark for 6 hr. The adhesion of the film to the glass plate was measured while pulling the film at a rate of 25 mm/min in a direction perpendicular to the glass plate using a universal testing machine (4443 UTM, Instron). The reduction rate of the adhesive strength values, expressed in Newtons (N), after curing and water immersion was calculated by the following equation:

$$\text{Reduction rate (\%)} = (\text{Adhesive strength (N) after water immersion/Adhesive strength (N) after curing}) \times 100$$

The results are shown in Table 2.

Shrinkage on cure

The shrinkage on cure of each of the photopolymerizable resin compositions was measured by the following method.

First, an empty pycnometer was weighed. The pycnometer was filled with water at 23 °C and closed with a stopcock. After the water remaining on the outer surface of the pycnometer was removed, the weight of the filled pycnometer was measured and recorded. The film sample (5 $\pm$ 0.1 g) after curing at 30 fpm and 1.0 J/cm$^2$ was put into the pycnometer. The difference in the weight of the pycnometer was calculated and recorded. The pycnometer was filled with water so that the film sample was fully immersed. The weight of the filled pycnometer was measured.

The shrinkage on cure (%) was calculated according to the following equations:

$$X = (a \times d)/(b + am)$$

where a = Film sample weight
d = Specific gravity of uncured sample
b = Weight of pycnometer and water
m = Weight of water and sample in pycnometer
e = Weight of pycnometer

$$\textbf{Shrinkage (\%) = (X-d)/d}$$

Thermal shock resistance test

Specimens were produced in the same manner as the production method of the specimens for the tensile strength measurement. Each of the specimens was cut to a size of 5 cm $\times$ 5 cm and left standing at 85 °C for 7 days. The occurrence of breakage or cracks in the specimen was visually observed.

The thermal shock resistance of the sample was evaluated based on the following criteria:

A: No breakage or cracks were observed
B: About one or two hairline cracks were observed
C: Three or more hairline cracks were observed
D: Hairline cracks and breakage were observed

Wear resistance

The wear resistance of the coated specimens was evaluated in accordance with ASTM F2357-04. First, the surface of each of the specimens was rubbed with an industrial eraser (Pink Pearl 4A, Mitsubishi) under a load of 500 g using an R.C.A abrasion tester (manufactured by Norman Tool). Rubbing was repeated 1,500 times at a rate of 40 times/min. The haze values of the specimen after curing and at the time when the appearance of the surface began to deform were measured using a haze-gard plus instrument (manufactured by BYK Gardner), and their difference was calculated. The wear resistance of the specimen was evaluated based on the following criteria:

A: ΔHaze < 2, B: 2 < ΔHaze < 4, C: ΔHaze > 4

Chemical resistance

Similarly to the wear resistance evaluation method, the chemical resistance of the specimen was evaluated by the following method. A surface area (1 cm × 4 cm) of the specimen was sufficiently wetted with methyl alcohol (99.3%), followed by rubbing with an industrial eraser (Pink Pearl 4A, Mitsubishi). Rubbing was repeated 400 times at a rate of 40 times/min. The haze of the specimen when the surface was exposed was compared with that of the specimen after curing, and their difference was calculated. The chemical resistance of the specimen was evaluated based on the following criteria:

A: ΔHaze ≤ 1. B: 1 < ΔHaze < 2. C: ΔHaze ≥ 2

UV test (QUV)

One-half of each of the film specimens after curing was covered with an aluminum foil and was located a distance of 20 cm from a lamp in a UV tester (QUV, UV lamp (15W, UV-B region, Sankyo Denki)). After the specimen was allowed to stand for 72 hr, it was taken out of the UV tester. The thickness of the specimen was measured using a micrometer (measuring range: 0-25 mm, graduations: 0.001 mm, MITUTOYO). The yellow index (ΔYI) of the specimen was measured using a spectrophotometer (CM-3700D, Minolta).

The measured physical properties of the compositions prepared in Examples 1-4 and Comparative Examples 1-3 are shown in Table 2.

**TABLE 2**

|  | Example 1 | Example 2 | Example 3 | Example 4 | Comparative Example 1 | Comparative Example 2 | Comparative Example 3 |
|---|---|---|---|---|---|---|---|
| Viscosity (cps) | 5,100 | 6,200 | 4,200 | 5,700 | 7,100 | 3,800 | 4,300 |
| 2.5% secant modulus (kgf/mm$^2$) | 95 | 91 | 81 | 77 | 121 | 132 | 140 |
| 2.5% secant modulus after water immersion (kgf/mm$^2$) | 92.1 (-3%) | 87.3 (-4%) | 77.7 (-4%) | 72.84 (-6%) | 95.6 (-21%) | 107 (-19%) | 109.2 (-22%) |
| Glass transition temperature (T$_g$, °C) | 65 | 62 | 58 | 55 | 78 | 80 | 86 |
| Adhesion to glass (reduction rate, %) | -5 | -7 | -8 | -8 | -13 | -14 | -16 |
| Shrinkage (%) | 3 | 2 | 2 | 2 | 8 | 8 | 9 |
| Shock resistance | A | A | A | A | B | B | C |
| Wear resistance | A | A | A | A | A | A | A |
| Chemical resistance | A | A | A | A | A | A | A |

(continued)

|  | Example 1 | Example 2 | Example 3 | Example 4 | Comparative Example 1 | Comparative Example 2 | Comparative Example 3 |
|---|---|---|---|---|---|---|---|
| ΔYI | 15 | 16 | 14 | 15 | 24 | 21 | 22 |

The rate of reduction in adhesive strength and the shrinkage are indicative of the reliability of an optical fiber. Generally, few or no changes in adhesive strength and shrinkage are desirable. It is preferred to maintain the rate of reduction in adhesive strength below 10% and the shrinkage below 5%. The compositions of Examples 1-4, each including the multifunctional urethane acrylate oligomer, showed satisfactory results in terms of the rate of reduction in adhesive strength and shrinkage. Also, the compositions of Examples 1-4 showed excellent results in the shock resistance, wear resistance, chemical resistance and UV tests for determining the occurrence of deformation by external shock.

As can be seen from the results in Table 2, the photopolymerizable resin compositions of Comparative Examples 1-3, each including the multifunctional acrylate oligomer/monomer, showed excellent results in terms of wear resistance, chemical resistance and UV tests, but they showed unfavorable results in terms of the rate of reduction in adhesive strength and shrinkages. In contrast, the photopolymerizable resin compositions of Examples 1-4 showed low reduction rates in adhesive strength and low shrinkages, irrespective of the kind of the multifunctional urethane acrylate oligomer used.

## Claims

1. A photopolymerizable resin composition comprising 40 to 80% by weight of a photopolymerizable urethane (meth) acrylate oligomer, 10 to 40% by weight of a low-viscosity multifunctional urethane acrylate oligomer, and 1 to 10% by weight of a photoinitiator.

2. The photopolymerizable resin composition according to claim 1, wherein the low-viscosity multifunctional urethane acrylate oligomer has a viscosity at room temperature (25 °C) of 100,000 cps or below when 1 to 20% by weight of an acrylic monomer is added.

3. The photopolymerizable resin composition according to claim 2, wherein the low-viscosity multifunctional urethane acrylate oligomer is synthesized by reaction of a polyisocyanate having three or more isocyanate groups, an acrylate having a hydroxyl group and containing three or more acrylic moieties in the molecule, a metal catalyst, and a radical polymerization inhibitor.

4. The photopolymerizable resin composition according to claim 3, wherein the polyisocyanate is selected from the group consisting of 1,6-hexamethylene diisocyanate trimer, 1,6-hexamethylene diisocyanate biuret, 1,6-hexamethylene diisocyanate allophanate, and mixtures thereof.

5. The photopolymerizable resin composition according to claim 3, wherein the acrylate is a mixture of pentaerythritol tetraacrylate and pentaerythritol triacrylate.

6. The photopolymerizable resin composition according to claim 5, wherein the pentaerythritol tetraacrylate and the pentaerythritol triacrylate are present in amounts of 40 to 50% by weight and 50 to 60% by weight, respectively.

7. The photopolymerizable resin composition according to claim 3, wherein the metal catalyst is dibutyltin dilaurate as a tin compound or 1,8-diazabicyclo[5,4,0]undec-7-ene (DBU) as an amine compound.

8. The photopolymerizable resin composition according to claim 3, wherein the radical polymerization inhibitor is selected from the group consisting of hydroquinone, p-methoxyphenol, nitrobenzene, 2,6-di-tetrabutyl-4-methylphenol (BHT) and mixtures thereof.

9. The photopolymerizable resin composition according to claim 1, wherein the photopolymerizable urethane acrylate oligomer (A) is synthesized by reaction of at least one polyol selected from polyol copolymers and bisphenol derivatives, a polyisocyanate, an acrylate alcohol, a urethane reaction catalyst, and a polymerization inhibitor.

10. The photopolymerizable resin composition according to claim 1, further comprising a reactive acrylic monomer as a diluent.

11. The photopolymerizable resin composition according to claim 10, wherein the reactive acrylic monomer is selected from the group consisting of hexanediol diacrylate (HDDA), isobornyl acrylate (IBOA), phenoxyethyl acrylate and mixtures thereof.

12. The photopolymerizable resin composition according to claim 1, further comprising a photopolymerizable monomer having at least one acrylate, methacrylate or vinyl group in the molecular structure.

13. The photopolymerizable resin composition according to claim 12, wherein the photopolymerizable monomer is selected from the group consisting of phenoxyethyl acrylate, phenoxyethylene glycol acrylate, phenoxytetraethylene glycol acrylate, phenoxyhexaethylene glycol acrylate, isobornyl acrylate (IBOA), isobornyl methacrylate, N-vinylpyrrolidone (N-VP), N-vinylcaprolactam (N-VC), acryloyl morpholine (ACMO), ethoxylated bisphenol diacrylate, ethoxylated phenol monoacrylate, polyethylene glycol 400 diacrylate, tripropylene glycol diacrylate, trimethylpropane triacrylate (TMPTA), polyethylene glycol diacrylate, ethylene oxide-addition triethylolpropane triacrylate (EO-TMPTA), pentaerythritol tetraacrylate (PETA), 1,4-butanediol diacrylate, 1,6-hexanediol diacrylate, ethoxylated pentaerythritol tetraacrylate, ethoxylated nonylphenol acrylate, 2-phenoxyethyl acrylate, ethoxylated bisphenol A diacrylate, alkoxylated nonylphenol acrylate, alkoxylated trifunctional acrylate ester, metallic diacrylate, trifunctional acrylate ester, trifunctional methacrylate ester, and mixtures thereof.

14. The photopolymerizable resin composition according to claim 12, wherein the photopolymerizable monomer is present in an amount of 5 to 60% by weight, based on the total weight of the photopolymerizable resin composition.

15. The photopolymerizable resin composition according to claim 1, further comprising one or two additives selected from leveling agents, slip agents and stabilizers.

16. An optical fiber comprising an outer coating film formed using the photopolymerizable resin composition according to any of claims 1 to 15.

17. The optical fiber according to claim 16, wherein the outer coating film has a shrinkage after immersion in water at 50 to 70 °C of less than 5%.

18. The optical fiber according to claim 16, wherein the adhesion strength of the outer coating film to glass after immersion in water at 50 to 70 °C is reduced by less than 10%.

19. The optical fiber according to claim 16, wherein the outer coating film has a 2.5% secant modulus of 60 to 100 kgf/mm$^2$.

20. The optical fiber according to claim 19, wherein the 2.5% secant modulus of the outer coating film after immersion in water at 50 to 70 °C is reduced by less than 10%.